# EUROPEAN PATENT SPECIFICATION

(11) **EP 3 359 332 B1**
(45) Date of publication and mention of the grant of the patent: **28.08.2019**
(21) Application number: 16797640.6
(22) Date of filing: 05.10.2016
(51) Int. Cl.: B23Q 1/52, B23Q 1/56, B23Q 5/00

(54) **SPINDLE MOUNTING HEAD FOR A MACHINE TOOL**
SPINDELMONTAGEKOPF EINER WERKZEUGMASCHINE
TÊTE DE MONTAGE À BROCHE POUR UNE MACHINE-OUTIL

(30) Priority: 05.10.2015 IT UB20154125
(43) Date of publication of application: 15.08.2018
(73) Proprietor: Mandelli Sistemi SPA, 29122 Piacenza (IT)
(72) Inventor: MULAZZI, Francesco, 29029 Rivergaro (Piacenza) (IT); POZZOLI, Edoardo, 29019 San Giorgio Piacentino (Piacenza) (IT)
(74) Representative: Zermani, Umberto
(86) International application number: PCT/IB2016/055946
(87) International publication number: WO 2017/060822

(56) References cited:
- DE-A1-102005 046 847
- DE-A1-102010 037 737
- DE-A1-102010 054 636
- US-B1- 7 909 550

## Description

### Technical field

This invention relates to a spindle-mounting head for a machine tool, preferably for a machining centre *tilting* head machining centre.

This invention is applied in particular in the sector of mechatronics, in particular in the production of machining centres for the aeronautics and aerospace sectors.

### Background art

In the prior art, the machining centres are divided by type and number of "operating" axes; more specifically, machining centres are known which are equipped with a tool-holder spindle rotatable about its own central axis and at the same time *tilting,* that is, which can be oriented, by rotation about an axis at right angles to the central axis. These machines typically have 5 axes or more, wherein the spindle-mounting head comprises inside it the movement system, that is to say, the orientation system, of the spindle.

Patent document US5584621, which is now quite old, shows a first prior art solution for the movement of the spindle about the so-called "axis A", that is to say, the horizontal axis, wherein the spindle is coupled directly to an electric motor/torque motor.

This solution does allow a high dynamic level, free of clearances, but does not allow the generation of high torques keeping the dimensions of the head reduced, an essential specification in certain applications, such as, for example, that of aeronautics.

A further prior art solution comprises a screw-gear coupling, wherein the gear is connected directly to the spindle whilst the screw is moved, either directly or by means of gear wheels or belts, by the motor.

That solution, whilst it is inexpensive and generally not bulky, has several drawbacks linked to the presence of clearances, which are intrinsic in the screw-gear coupling, which, if they are to be limited or eliminated, lead to an increase in friction, with consequent critical issues in terms of machining speed and wear.

According to another prior art solution the motion between the motor and the spindle is transmitted by means of a transmission system with gears/gear wheels positioned in cascade fashion.

More precisely, the motor is coupled to a series of gear wheels which following a series of reductions transmit the rotational motion to a gear constrained to the spindle.

In these solutions there are systems for recovery of the clearance of the elastic type (i.e. springs) or hydraulic type, applied to one of the branches of the cascade of gears, which allow maximum operating precision.

Disadvantageously, this solution is bulky and structurally complex, since it has to provide numerous gear wheels along at least two distinct branches, one of which is in turn equipped with a preloading system for recovering the clearance.

Moreover, since it is a single cascade of gears which gives the torque and the preloading, the transmissible torque is also a critical parameter and limited.

Lastly, more recently, some manufacturers have developed transmission systems dedicated to machine tools with electric spindles, wherein on each arm of the spindle-mounting fork there is a motor with the relative mechanical transmission system, in turn coupled with the spindle by a gear.

Thus, in this solution two gears are constrained to the spindle positioned on opposite sides of it and each is coupled with a respective transmission system.

Disadvantageously, this solution is very bulky as it occupies the entire space available for the manufacturers on both arms of the fork with two cascades of gears and especially two gears, preventing its use in machining centres with mechanical actuation of the spindle (i.e. rotation of the tool).

Further prior art solutions are known from documents US7909550 and DE102010037737, both describing spindle-mounting heads having high encumbrance.

### Disclosure of the invention

The aim of this invention is therefore to provide a spindle-mounting head for a machine tool which overcomes the above-mentioned drawbacks of the prior art.

More specifically, the aim of this invention to provide a spindle mounting head for a machine tool which combines the speed of movement with the possibility of delivering a high torque, maintaining in any case limited dimensions.

This aim is achieved by a spindle-mounting head for a machine tool having the features described in one or more of the subsequent claims and in particular comprising a supporting body comprising at least one arm protruding up to its own end portion, a tool-holder spindle rotatably connected to the arm at the end portion to rotate about an axis of oscillation, wherein the spindle comprises a tool-holder body rotatable about its own machining axis at right angles to the axis of oscillation and movement means operatively interposed between the arm and the spindle to rotate it about the axis of oscillation, wherein the movement means comprise at least one gear constrained to the spindle and coaxial to the axis of oscillation.

According to the invention, the movement means comprise a first and a second motor both housed in the arm and coupled to the gear at, respectively, a first and a second angular position in order to transmit rotary motion to the gear about the axis of oscillation; the movement means also comprising a control unit associated with the first and the second motor and configured to control the motors in a complementary fashion to move the gear and at the same time reduce the clearances.

Advantageously, in this way it is possible to obtain a spindle-mounting head.

### Brief description of the drawings

These and other features and the relative advantages will become more apparent from the following non-limiting description of a preferred embodiment of a spindle-mounting head for a machine tool as illustrated in the accompanying drawings, in which:

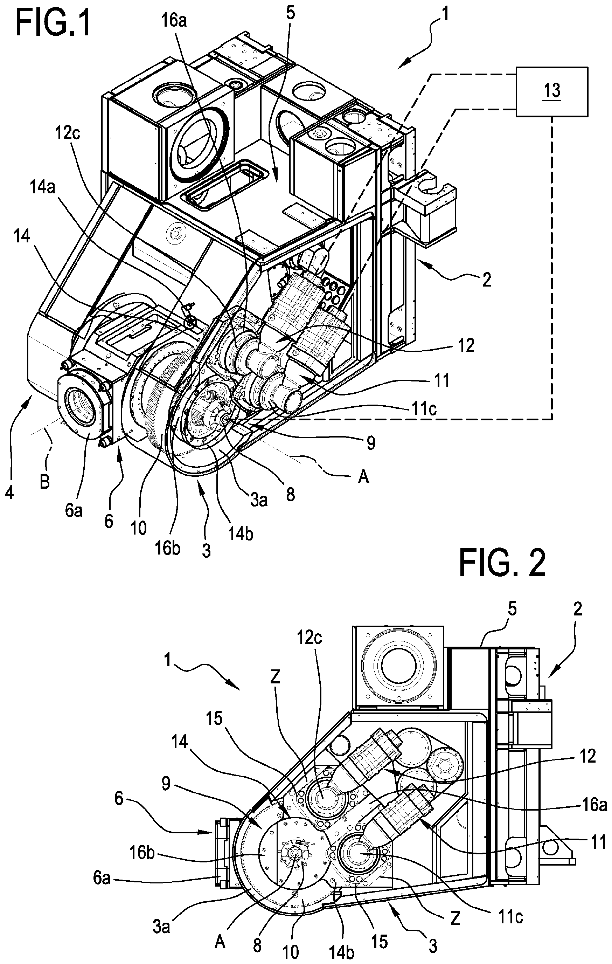

- Figure 1 shows a perspective view of the spindle-mounting head according to the invention, with some parts transparent in order to better illustrate others;
- Figure 2 shows a side view of the spindle-mounting head of Figure 1;

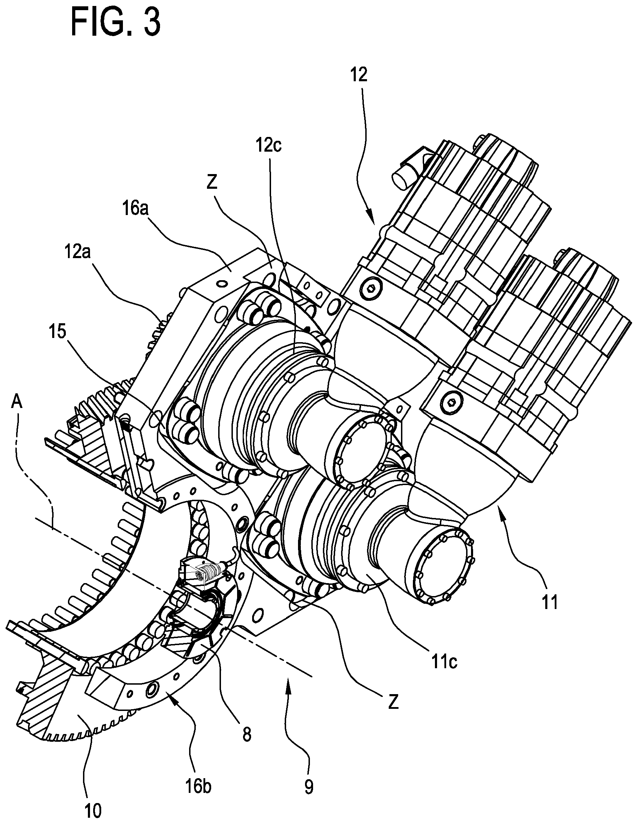

- Figure 3 shows a detail of the spindle-mounting head of Figure 1;

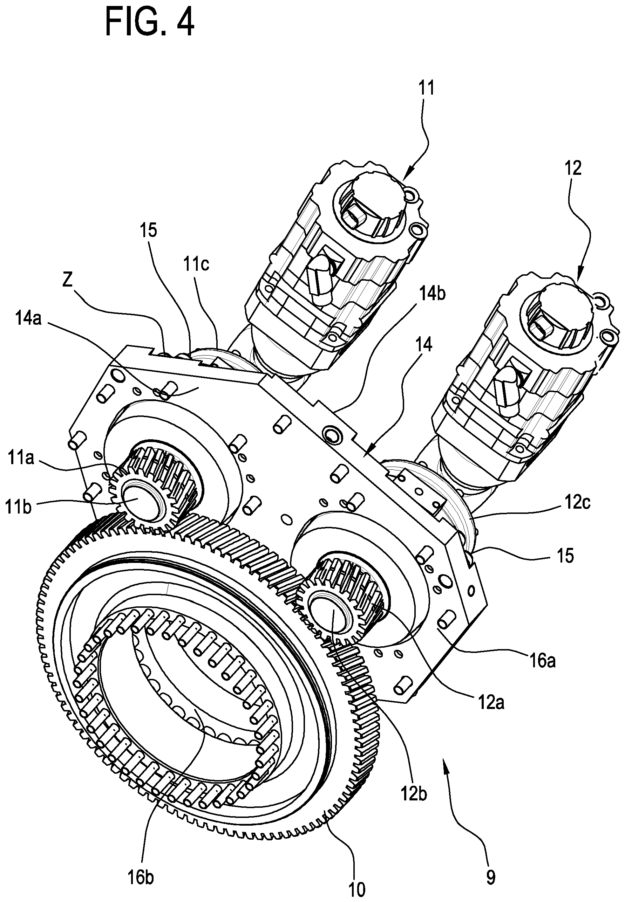

- Figure 4 shows a further perspective view of the detail of Figure 3;
- Figure 5 shows a schematic front view of the spindle-mounting head of Figure 1.

### Detailed description of preferred embodiments of the invention

With reference to the accompanying drawings, the numeral 1 denotes a spindle-mounting head for a machine tool 100 according to this invention.

The spindle-mounting head 1 is located in machining centres 100 with a *tilting* head, that is to say, with spindle-mounting head which is able to vary its orientation relative to an axis of rotation (or axis of oscillation "A") which is typically, but not exclusively, horizontal.

The machining centre, or machine tool 100, comprises a part-holder table, generally rotatable about its own axis and/or movable along one or more directions of movements.

The table is associated with a frame from which extends a supporting structure for the spindle-mounting head 1.

The supporting structure in turn may be movable along one or more axes of movement relative to the table.

The supporting structure is also associated with the spindle-mounting head 1, preferably in a movable fashion along the supporting structure so as to vary the height of the spindle relative to the part-holder table.

The spindle-mounting head 1 comprises a supporting body 2 equipped with at least one arm 3 protruding up to its own end portion 3a.

The arm 3 extends from a base portion 5 of the supporting body 2 away from it.

A tool-holder spindle 6 is rotatably connected to the arm 3, preferably at the end portion 3a, in such a way as to rotate about an axis of oscillation "A" (or *tilt* axis).

In the preferred embodiment, the axis of oscillation "A" is substantially horizontal.

Preferably, a first 3 and a second arm 4 protruding from a base portion 5 and defining a forked structure wherein the spindle 6 is rotatably located.

Thus, the two arms 3, 4 are substantially parallel to and facing each other.

In turn, the spindle 6 comprises a tool-mounting body 6a rotatable about its own machining axis "B" at right angles to the axis of oscillation "A". In other words, the tool-mounting body 6a is configured to rotate about itself.

In this regard, it should be noted that the spindle mounting head comprises a motion transmission unit "T" operatively associated with the tool-mounting body 6a to put it in rotation about its own machining axis "B".

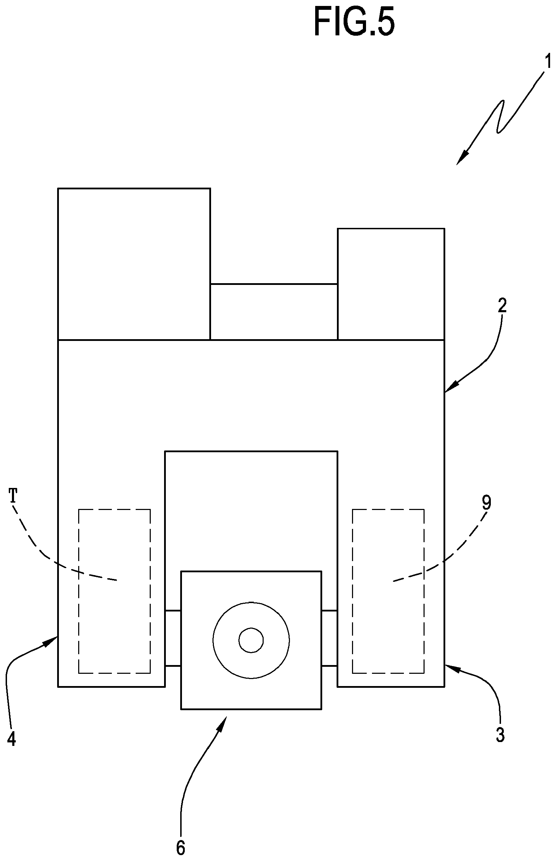

The transmission unit (illustrated schematically in Figure 5) is housed in the second arm 4 of the supporting body 2.

Thus, the second arm 4 defines a housing wherein the transmission unit "T" is located (at least partly).

The transmission unit preferably comprises at least one motor and a reduction system comprising one or more gear wheels and/or one or more belts and/or a screw-gear system (not illustrated).

It should be noted that in applications with an electro-spindle, the second arm 4 would advantageously remain free and can be used for housing other components.

Movement means 9 configured for rotating the spindle 6 about the axis of oscillation "A" are located at the first arm 3.

The movement means 9 are thus configured to vary the orientation of the spindle 6 in space as a function of the type of machining to be performed on the part.

The movement means 9 are thus operatively interposed between the (first) arm 3 and the spindle 6.

More specifically, the movement means 9 comprise at least one gear 10 constrained to the spindle 6 and coaxial to the axis of oscillation "A".

The gear 10 may have, without distinction, an external (preferable) or internal toothed profile.

In any case, the gear 10 is bolted to or in any case fixed to the spindle 6 for rotating integrally with it (that is to say, to rotate it).

Preferably, the movement means 9 also comprise a first 11 and a second motor 12, which are both housed in the (first) arm 3 and coupled to the gear 10.

More specifically, the first motor 11 is coupled to the gear 10 at a first angular position.

The second motor 12 is coupled to the gear 10 at a second angular position. There is also a control unit 13 associated with the first 11 and the second motor 12 and configured to control the motors in a complementary fashion to move the gear 10 and at the same time reduce the clearances.

In other words, both the motors 11, 12 are controlled by the control unit 13 both in active mode, that is to say, providing torque to the gear 10, and in "passive" mode, that is to say, providing the preloading necessary to reduce, if not actually eliminate, the intrinsic clearances in the gear wheel coupling.

In effect, the presence of two independent motors allows one of the motors to be used (controlled) in such a way as to provide the preloading necessary to eliminate the clearances, but using them both to provide actuating torque. Structurally, the first 11 and second motor 12 are side by side, preferably coplanar.

More preferably, the first 11 and the second motor 12 are arranged parallel to each other, even more preferably oriented along a direction of extension of the arm 3.

Moreover, each motor 11, 12 is coupled to the gear 10 by means of at least one pinion 11a, 12a located in the respective first or second angular position. Advantageously, in this way the structure is simple and fast both to install and disassemble/maintain.

It should be noted that the coupling between pinion or gear wheel 11a, 12a and gear 10 is achieved with helical gears.

Preferably, the spindle-mounting head 1 comprises at least one supporting plate 14 housed in the (first) arm 3.

The plate 14 is substantially flat and lies in a plane parallel to a direction of extension of the arm 3.

Preferably, the plate 14 is a distinct element from the arm 3, but, alternatively, could be made integrally with it (for example, by fusion) and define equally the anchoring for the movement means 9.

The plate 14 has a first face 14a and a second face 14b opposite to each other and both at right angles to the axis of oscillation "A".

More precisely, the first face 14a faces the gear 10, whilst the motors 11, 12 are connected to the second face 14b.

Thus, each motor 11, 12 is coupled with the gear 10 by at least the respective pinion or gear wheel 11a, 12a projecting outside the first face 14a of the plate 14.

Thus, the motors 11, 12 have at least one shaft extending parallel to the axis of oscillation "A" and passing through the plate 14.

In this regard, preferably, the plate 14 comprises a pair of fastening areas "Z" for the motors 11, 12.

Each fastening area "Z" comprises means 15 for finely adjusting the position of the respective motor 11, 12, preferably defined by slots or by screw regulating means.

Further, each fastening area "Z" has at least one through hole for the passing through of the transmission shaft 11b, 12b of the motor 11, 12.

In order to optimise the torque and speed parameters, each motor 11, 12 comprises a speed reducer 11c, 12c.

Preferably, the speed reducers 11c, 12c are constrained to the second face 14b of the plate 14, at a fastening area "Z"'.

From a structural point of view, preferably the plate 14 comprises a full first half-part 16a to which the motors 11, 12 are constrained and an annular second half-part 16b facing the gear 10.

Thus, the fastening zones "Z" are made on the first half-part 16a.

In other words, the slots and the through holes are made on the first half-part 16a of the plate 14.

The second half-part 16b is, as mentioned, facing the gear 10, preferably coaxial with it.

There is also angular movement detector 8 (encoder) also connected to the second half-part 16b.

The encoder is functionally connected to the control unit 13 for sending a signal representing the angular position of the spindle 6.

The invention achieves the above mentioned aims and brings important advantages.

In effect, the location of two electric motors alongside each other and engaged independently to the gear for movement of the spindle allows, on the one hand, to have a high dynamic level in the motion with equally high torque transmitted, and, on the other hand, eliminates clearance in a simple manner whilst keeping the overall dimensions small.

Advantageously, moreover, by anchoring all the functional elements to a single support (plate) and locating it in an arm of the fork, it is possible to free up space in the second arm of the fork, in which it is possible to house and install the unit for transmission of the rotary movement to the tool-holder.

## Claims

1. A spindle-mounting head for a machine tool, comprising:
- a supporting body (2) comprising a first (3) and a second arm (4) protruding from a base portion (5) and defining a forked structure; said first arm (3) protruding up to its own end portion (3a);
- a tool-mounting spindle (6) rotatably connected to the first arm (3) within the forked structure to rotate about an axis of oscillation (A); the spindle (6) comprising a tool-mounting body (6a) rotatable about its own machining axis (B) at right angles to the axis of oscillation (A);
- movement means (9) operatively interposed between the first arm (3) and the spindle (6) to put it in rotation about the axis of oscillation (A); the movement means (9) comprising at least one gear (10) constrained to the spindle (6) and coaxial to the axis of oscillation (A);
wherein the movement means (9) comprise a first (11) and a second motor (12) both housed in the first arm (3) and coupled to the gear (10) at, respectively, a first and a second angular position in order to transmit rotary motion to the gear (10) about the axis of oscillation (A); the movement means (9) also comprising a control unit (13) associated with the first (11) and the second motor (12) and configured to control the motors (11, 12) in a complementary fashion to move the gear (10) and at the same time reduce the clearances, **characterised in that** it comprises a motion transmission unit operatively associated with the tool mounting body (6a) to put it in rotation about its own machining axis (B); the transmission unit being housed in the second arm (4) of the supporting body (2).

2. The spindle-mounting head according to claim 1, **characterised in that** the first (11) and the second motor (12) are side by side.

3. The spindle-mounting head according to claim 1 or 2, **characterised in that** it comprises at least one supporting plate (14) housed in the arm (3) and having at least a first face (14a) and a second face (14b) which are opposite each other and are both orthogonal to the axis of oscillation (A), wherein the first face (14a) faces the gear (10) and the motors (11, 12) are connected to the second face (14b).

4. The spindle mounting head according to claim 3, **characterised in that** each motor (11, 12) is coupled with the gear (10) by at least one gear wheel (11a, 12a) projecting outside the first face (14a) of the plate (14).

5. The spindle mounting head according to claim 3 or 4, **characterised in that** the plate (14) comprises a pair of fastening areas (Z) for the motors (11, 12); each fastening area (Z) having means (15) for finely adjusting the position of the motor (11, 12).

6. The spindle mounting head according to any of claims from 3 to 5, **characterised in that** each motor (11, 12) comprises a speed reducer (11c, 12c) constrained the second face (14b) of the plate (14), at a fastening area (Z).

7. The spindle mounting head according to any of claims from 3 to 6, **characterised in that** the plate (14) comprises a full first half-part (16a) to which the motors (11, 12) are constrained and an annular second half-part (16b) facing the gear (10).

8. The spindle mounting head according to any one of the preceding claims, **characterised in that** the first (11) and second motor (12) are positioned parallel with each other.

9. The spindle mounting head according to any one of the preceding claims, **characterised in that** the movement means (9) is positioned in the first arm (3).

## Patentansprüche

1. Spindelmontagekopf einer Werkzeugmaschine, umfassend:
- einen Halterungskörper (2), umfassend einen ersten (3) und einen zweiten Arm (4), hervorstehend von einem Basisabschnitt (5) und definierend eine gabelförmige Konstruktion, wobei der erste Arm zu seinem eigenen Endabschnitt (3a) nach oben hervorsteht;
- einen Werkzeugmontagespindel (6), drehbar verbunden mit dem ersten Arm (3) innerhalb der gabelförmigen Konstruktion, um sich um eine Schwenkachse (A) zu drehen, wobei die Spindel (6) einen Werkzeugmontagekörper (6a) umfasst, drehbar um dessen Bearbeitungsachse (B) in rechten Winkeln zur Schwenkachse (A);
- Bewegungsmittel (9), die betriebswirksam zwischen dem ersten Arm (3) und der Spindel (6) eingesetzt sind, um diese um die Schwenkachse (A) in Drehung zu versetzen, wobei die Bewegungsmittel (9) mindestens ein Getriebe (10) umfassen, das an der Spindel (6) fest gebunden und koaxial zur Schwenkachse (A) angeordnet ist,
wobei die Bewegungsmittel (9) einen ersten (11) und einen zweiten Motor (12) umfassen, die beide im ersten Arm (3) untergebracht und mit dem Getriebe (10) gekoppelt sind, jeweils an einer ersten und einer zweiten Winkelposition, um eine Drehbewegung auf das Getriebe (10) um die Schwenkachse (A) zu übertragen, wobei die Bewegungsmittel (9) auch eine Steuereinheit (13) umfassen, die mit dem ersten (11) und dem zweiten Motor (12) assoziiert und ausgelegt ist, um die Motoren (11, 12) komplementär zu steuern, um das Getriebe (10) zu bewegen und gleichzeitig die Abstände zu reduzieren, **dadurch gekennzeichnet, dass** er eine Bewegungsübertragungseinheit umfasst, die betriebswirksam mit dem Werkzeugmontagekörper (6a) assoziiert ist, um diesen um seine eigene Bearbeitungsachse (B) in Drehung zu versetzen, wobei die Übertragungseinheit im zweiten Arm (4) des Halterungskörpers (2) untergebracht ist.

2. Spindelmontagekopf nach Anspruch 1, **dadurch gekennzeichnet, dass** der erste (11) und der zweite Motor (12) nebeneinander angeordnet sind.

3. Spindelmontagekopf nach Anspruch 1 oder 2, **dadurch gekennzeichnet, dass** er mindestens eine Halterungsplatte (14) umfasst, die im Arm (3) untergebracht ist, und aufweisend mindestens eine erste Seitenfläche (14a) und eine zweite Seitenfläche (14b), die gegenständig zueinander und beide rechtwinkelig zur Schwenkachse (A) angeordnet sind, wobei die erste Seitenfläche (14a) dem Getriebe (10) zugewandt ist und die Motoren (11, 12) mit der zweiten Seitenfläche (14b) verbunden sind.

4. Spindelmontagekopf nach Anspruch 3, **dadurch gekennzeichnet, dass** ein jeder Motor (11, 12) mit dem Getriebe (10) durch mindestens ein Zahnrad (11a, 12a) verbunden ist, hervorstehend außerhalb der ersten Seitenfläche (14a) der Platte (14).

5. Spindelmontagekopf nach Anspruch 3 oder 4, **dadurch gekennzeichnet, dass** die Platte (4) ein Paar Befestigungsbereiche (Z) für die Motoren (11, 12) umfasst, wobei ein jeder Befestigungsbereich (Z) Mittel (15) für die Feineinstellung der Position des Motors (11, 12) aufweist.

6. Spindelmontagekopf nach einem der Ansprüche 3 bis 5, **dadurch gekennzeichnet, dass** ein jeder Motor (11, 12) einen Drehzahlminderer (11c, 12c) umfasst, fest gebunden an der zweiten Seitenfläche (14b) der Platte (14) an einem Befestigungsbereich (Z).

7. Spindelmontagekopf nach einem der Ansprüche 3 bis 6, **dadurch gekennzeichnet, dass** die Platte (14) einen vollständigen ersten Halbteil (16a), an dem die Motoren (11, 12) fest gebunden sind, und einen ringförmigen zweiten Halbteil (16b) umfasst, der dem Getriebe (10) zugewandt ist.

8. Spindelmontagekopf nach einem der vorhergehenden Ansprüche, **dadurch gekennzeichnet, dass** der erste (11) und zweite Motor (12) parallel zueinander positioniert sind.

9. Spindelmontagekopf nach einem der vorhergehenden Ansprüche, **dadurch gekennzeichnet, dass** die Bewegungsmittel (9) im ersten Arm (3) positioniert sind.

## Revendications

1. Tête de montage à broche pour une machine-outil, comprenant :
- un corps de support (2) comprenant un premier (3) et un second bras (4) dépassant d'une partie de base (5) et définissant une structure en fourche ; ledit premier bras (3) dépassant vers le haut par rapport à sa propre partie d'extrémité (3a) ;
- une broche de montage à outil (6) reliée en rotation au premier bras (3) à l'intérieur de la structure en fourche pour tourner autour d'un axe d'oscillation (A) ; la broche (6) comprenant un corps de montage à outil (6a) pouvant tourner autour de son propre axe d'usinage (B) à angles droits par rapport à l'axe d'oscillation (A) ;
- des moyens de déplacement (9) fonctionnellement interposés entre le premier bras (3) et la broche (6) pour la mettre en rotation autour de l'axe d'oscillation (A) ; les moyens de déplacement (9) comprenant au moins un engrenage (10) solidaire de la broche (6) et coaxial à l'axe d'oscillation (A) ;
dans laquelle les moyens de déplacement (9) comprennent un premier (11) et un second moteur (12) logés tous les deux dans le premier bras (3) et couplés à l'engrenage (10) en correspondance, respectivement, d'une première et d'une seconde position angulaire afin de transmettre le mouvement de rotation à l'engrenage (10) autour de l'axe d'oscillation (A) ; les moyens de déplacement (9) comprenant également une unité de commande (13) associée au premier (11) et au second moteur (12) et étant configurée pour commander les moteurs (11, 12) d'une façon complémentaire pour déplacer l'engrenage (10) et dans le même temps réduire les jeux, **caractérisée en ce qu'**elle comprend une unité de transmission de déplacement fonctionnellement associée au corps de montage à outil (6a) pour le mettre en rotation autour de son propre axe d'usinage (B) ; l'unité de transmission étant logée dans le second bras (4) du corps de support (2).

2. Tête de montage à broche selon la revendication 1, **caractérisée en ce que** le premier (11) et le second moteur (12) sont côte à côte.

3. Tête de montage à broche selon la revendication 1 ou 2, **caractérisée en ce qu'**elle comprend au moins une plaque de support (14) logée dans le bras (3) et comportant au moins un premier côté (14a) et un second côté (14b) étant opposés l'un à l'autre et tous deux orthogonaux à l'axe d'oscillation (A), dans laquelle le premier côté (14a) fait face à l'engrenage (10) et les moteurs (11, 12) sont reliés au second côté (14b).

4. Tête de montage à broche selon la revendication 3, **caractérisée en ce que** chaque moteur (11, 12) est couplé à l'engrenage (10) par au moins une roue dentée (11a, 12a) dépassant à l'extérieur du premier côté (14a) de la plaque (14).

5. Tête de montage à broche selon la revendication 3 ou 4, **caractérisée en ce que** la plaque (14) comprend une paire de zones de fixation (Z) pour les moteurs (11, 12) ; chaque zone de fixation (Z) comportant des moyens (15) pour régler finement la position du moteur (11, 12) .

6. Tête de montage à broche selon l'une quelconque des revendications de 3 à 5, **caractérisée en ce que** chaque moteur (11, 12) comprend un réducteur de vitesse (11c, 12c) solidaire du second côté (14b) de la plaque (14), en correspondance d'une zone de fixation (Z).

7. Tête de montage à broche selon l'une quelconque des revendications de 3 à 6, **caractérisée en ce que** la plaque (14) comprend une première moitié entière (16a) à laquelle les moteurs (11, 12) sont solidaires et une seconde moitié annulaire (16b) faisant face à l'engrenage (10).

8. Tête de montage à broche selon l'une quelconque des revendications précédentes, **caractérisée en ce que** le premier (11) et le second moteur (12) sont positionnés parallèlement l'un à l'autre.

9. Tête de montage à broche selon l'une quelconque des revendications précédentes, **caractérisée en ce que** les moyens de déplacement (9) sont positionnés dans le premier bras (3).
